# FASCICULE DE BREVET EUROPEEN

(11) **EP 0 467 065 B1**
(45) Date de publication et mention de la délivrance du brevet: **16.02.1994**
(21) Numéro de dépôt: 91109466.2
(22) Date de dépôt: 10.06.1991
(51) Int. Cl.: A47J 37/12

(54) **Friteuse électrique**
Elektrisches Fritiergerät
Electric fryer

(30) Priorité: 12.06.1990 FR 9007263
(43) Date de publication de la demande: 22.01.1992
(73) Titulaire: MOULINEX, F-93170 Bagnolet (FR)
(72) Inventeur: Jacob, Robert Charles Jacques, MOULINEX, F-14123 Cormelles le Royal (FR); Lucas, Francois Jean-Paul, MOULINEX, F-14123 Cormelles le Royal (FR)
(74) Mandataire: May, Hans Ulrich, Dr.

(56) Documents cités:
- EP-A- 0 309 435
- FR-A- 1 513 132
- US-A- 2 546 464
- US-A- 3 071 064

## Description

L'invention se rapporte à une friteuse électrique comportant, dans un boîtier, une cuve contenant un bain de cuisson, une résistance chauffante électrique adaptée à chauffer ledit bain, ainsi qu'un panier destiné à recevoir des aliments à frire .

l'invention concerne, plus particulièrement, une friteuse de ce type dans laquelle le panier est susceptible d'occuper, soit une position abaissée pour laquelle le panier est plongé dans le bain, soit une position élevée pour laquelle le panier est maintenu au-dessus du bain, grâce à des moyens motorisés de descente et de remontée du panier commandés par un dispositif de commande comportant une minuterie mécanique réglable motorisée.

Dans les friteuses connues de ce genre, le panier en position élevé est descendu en sa position abaissée dès que la température du bain de cuisson atteint la température adéquate, la minuterie décomptant ensuite le temps jusqu'à la fin de la cuisson, puis le panier remonte en position élevée. Pour réaliser ce cycle, ces friteuses sont équipées d'un dispositif de commande plus ou moins complexe destiné à commander sélectivement deux moteurs indépendants, un moteur pour la minuterie et un moteur pour les moyens motorisés de descente et de remontée du panier, ce qui présente l'inconvénient d'être onéreux et volumineux.

On connaît également par le brevet Européen EP A 309.435 une friteuse comprenant un moteur unique destiné à entraîner simultanément la minuterie et les moyens de déplacement du panier dans la mesure où ceux-ci sont commandés et entraînés à partir du mouvement de la minuterie. La commande et l'entraînement étant réalisés au moyen d'organes mécaniques transmettant le mouvement de la minuterie à un système de leviers actionnant le panier.

Ce système présente l'inconvénient de faire supporter aux organes transmettant le mouvement de la minuterie aux moyens de déplacement du panier d'importantes contraintes.

La résistance et la fiabilité de ces organes risquent ainsi d'être compromises.

L'invention a pour but de remédier à ces inconvénients et notamment de réaliser une friteuse automatique fiable, économique, d'un volume réduit et susceptible d'être fabriquée en grande série.

Selon l'invention, les moyens de descente et de remontée du panier et la minuterie sont entraînés par un moteur unique, et le dispositif de commande comporte en outre un moyen de sélection automatique subordonné à un organe de réglage de la minuterie et à la position du panier, de manière à entraîner sélectivement, soit la minuterie quand le panier occupe sa position abaissée, soit les moyens de descente et de remontée du panier.

Ainsi, grâce audit moyen de sélection, le moteur remplit successivement deux fonctions, l'entraînement de la minuterie et l'entraînement du moyen de descente et de remontée du panier. En outre, on obtient un cycle de cuisson entièrement automatique avec un minimum d'éléments constitutifs. Le mécanisme étant de plus entièrement électro-mécanique, il est fiable, économique et occupe un volume réduit.

Les caractéristiques et avantages de l'invention ressortiront d'ailleurs de la description qui va suivre, à titre d'exemple, en référence aux dessins annexés dans lesquels :

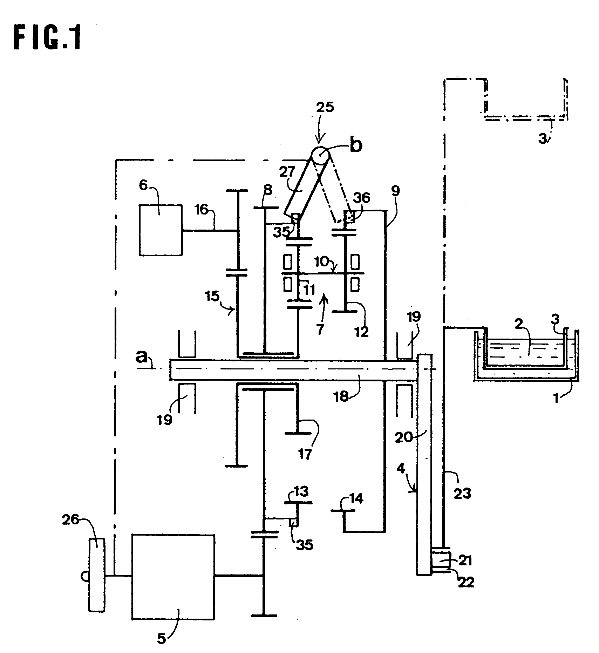

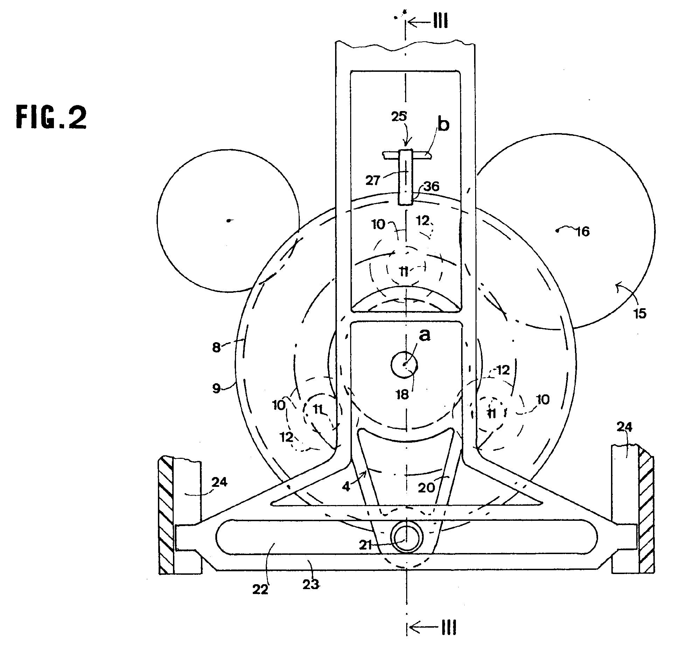

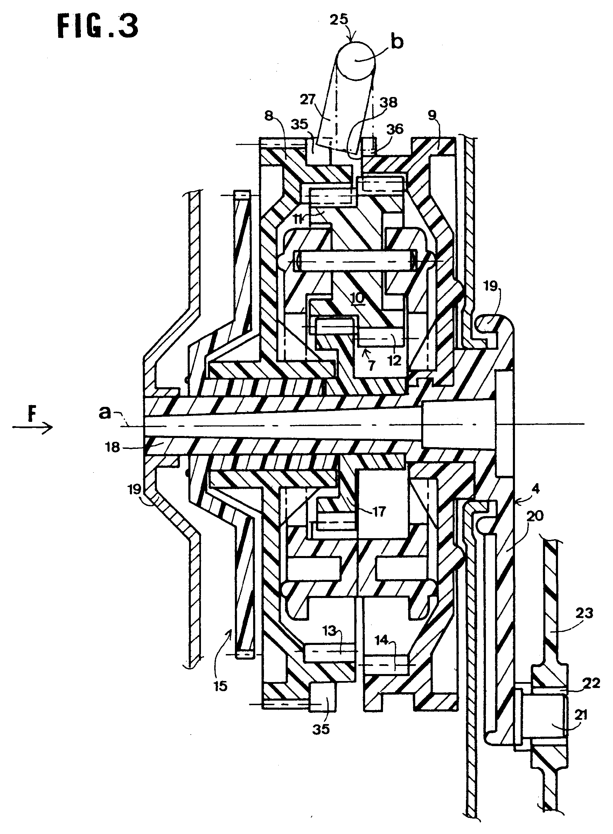

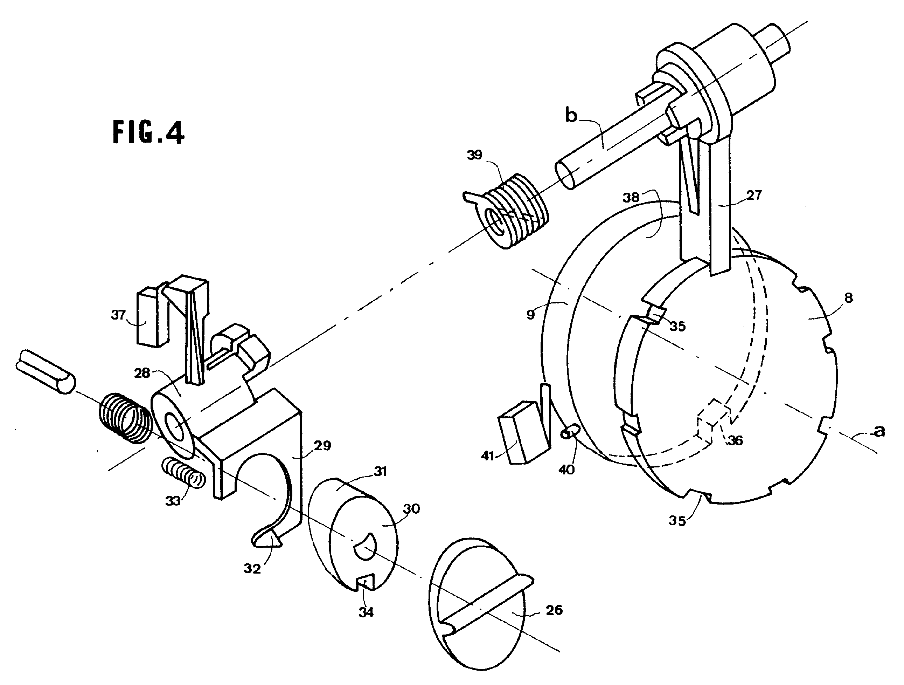

la figure 1 est une vue schématique d'une friteuse selon l'invention illustrant la cinématique du dispositif de commande des moyens motorisés de descente et de remontée du panier ; la figure 2 est une vue en élévation notamment des moyens motorisés de descente et de remontée du panier ; la figure 3 est une vue en coupe verticale selon la ligne III-III de la figure 2 à échelle agrandie ; la figure 4 est une vue éclatée en perspective selon la flèche F de la figure 3 illustrant le moyen de sélection et l'organe de réglage de la minuterie .

La friteuse électrique schématisée sur la figure 1 comporte, dans un boîtier (non représenté), une cuve 1 contenant un bain de cuisson 2, une résistance chauffante électrique (non représentée) adaptée à chauffer ledit bain 2, ainsi qu'un panier 3 destiné à recevoir des aliments à frire. Le panier 3 est susceptible d'occuper, soit une position abaissée (représentée en traits pleins sur la figure 1) pour laquelle le panier 3 est plongé dans le bain 2, soit une position élevée (représentée en traits interrompus sur la figure 1) pour laquelle le panier 3 est maintenu au-dessus du bain 2, grâce à des moyens motorisés 4 de descente et de remontée du panier 3 commandés par un dispositif de commande comportant une minuterie mécanique réglable motorisée 5.

Selon l'invention et comme on le voit sur les figure 1, 2 et 3, les moyens 4 de descente et de remontée du panier et la minuterie 5 sont entraînés par un moteur unique 6. On choisit de préférence un moteur synchrone du type utilisé communément dans les minuteries. Le moteur 6 entraîne en rotation autour d'un axe a, par l'intermédiaire d'un transmetteur de mouvement 7, une couronne d'entraînement 8 de la minuterie et une couronne d'entraînement 9 des moyens de descente et de remontée du panier, dite couronne d'entraînement du panier.

Le transmetteur de mouvement 7 est constitué par un train épicycloïdal disposé entre les deux couronnes 8,9 qui sont à cet effet dentées intérieurement, et comporte au moins un satellite, mais de préférence trois satellites 10 (figure 2) ayant chacun deux roues dentées 11,12 solidaires l'une de l'autre en rotation et engrenant respectivement avec les dentures internes 13,14 des deux couronnes 8,9.

Les satellites 10 du transmetteur 7 sont entraînés en rotation par un jeu d'engrenages 15 eux-même entraînés en rotation par l'arbre 16 du moteur 6. La roue de sortie 17 dudit jeu engrène avec une 11 des deux roues de chaque satellite 10.

La couronne d'entraînement 8 de la minuterie et la roue de sortie 17 du jeu d'engrenages 15 sont montées folles autour d'un arbre 18 s'étendant selon l'axe de rotation a des couronnes 8,9 et solidaire de la couronne d'entraînement 9 du panier. Cet arbre 18 est monté dans deux paliers 19 solidaires du boîtier.

Les moyens 4 de descente et de remontée du panier comportent un maneton 20 entraîné en rotation par la couronne d'entraînement 9 du panier et dont l'extrémité libre 21 traverse une lumière 22 pratiquée dans un coulisseau 23 solidaire du panier 3 et monté déplaçable linéairement dans au moins une glissière, mais de préférence deux glissières 24, de manière que la rotation du maneton 20 soit transformée en une translation verticale du panier 3.

L'invention prévoit aussi que le dispositif de commande comporte en outre un moyen de sélection automatique 25 subordonné à un organe de réglage 26 de la minuterie 5 et à la position du panier 3, de manière à entraîner sélectivement, soit la minuterie 5 quand le panier 3 occupe sa position abaissée, soit les moyens 4 de descente et de remontée du panier. Pour cela, le moyen de sélection 25 comporte un doigt mobile de blocage 27 qui peut occuper deux positions, soit une position de blocage de la minuterie (représentée en traits pleins figures 1, 3 et 4) pour laquelle ledit doigt 27 bloque la rotation de la couronne d'entraînement 8 de la minuterie et autorise la rotation de la couronne d'entraînement 9 du panier, soit une position de blocage du panier (représentée en traits interrompus figures 1 et 3) pour laquelle ledit doigt 27 bloque la rotation de la couronne d'entraînement 9 du panier et autorise la rotation de la couronne d'entraînement 8 de la minuterie.
Ainsi, grâce au moyen de sélection 25, le moteur 6 remplit successivement deux fonctions, l'entraînement de la montée et de la descente du panier 3 et l'entraînement de la minuterie 5.

Comme on le voit sur la figure 4, le doigt de blocage 27 étant monté pivotant autour d'un axe b transversal à l'axe a des couronnes 8,9, le moyen de sélection 25 comporte en outre deux éléments, soit un premier élément 28 solidaire en rotation du doigt 27 et comportant un levier de pivotement 29 autour de l'axe b du doigt, soit un deuxième élément 30 solidaire en rotation de l'organe de réglage 26 de la minuterie et comportant une came 31 qui vient en appui sur l'extrémité libre 32 du levier 29 à l'encontre de moyens élastiques 33, par exemple un ressort à boudin, de sorte que la position du doigt 27 est fonction de la position de l'extrémité libre 32 sur la came 31. Ainsi, le moyen de sélection 25 est subordonné à l'organe de réglage 26 de la minuterie 5.

Pour améliorer l'efficacité de la came 31, le deuxième élément 30 présente une ouverture 34 dans laquelle vient se loger l'extrémité libre 32 du levier 29 quand il fait pivoter le doigt en direction de la couronne d'entraînement 8 de la minuterie.

La couronne d'entraînement 8 de la minuterie comporte une pluralité d'encoches périphériques 35 destinées à recevoir le doigt de blocage 27 en position de blocage de la minuterie, alors que la couronne d'entraînement 9 du panier comporte une entaille unique 36 positionnée à la périphérie de ladite couronne 9 et destinée à recevoir le doigt de blocage 27 en position de blocage du panier 3 uniquement quand le panier occupe sa position abaissée. Ainsi, le moyen de sélection 25 est aussi subordonné à la position du panier 3.

Le fonctionnement de la friteuse selon l'invention est ainsi entièrement automatique.

On suppose qu'au départ le panier 3 occupe sa position élevée (représentée en traits interrompus sur la figure 1) et que le doigt 27 est engagé dans une encoche 35 de la couronne d'entraînement 8 de la minuterie (doigt représenté en traits pleins figures 1, 3 et 4).

L'utilisateur affiche un temps de cuisson en tournant l'organe de réglage 26 de la minuterie 5 de la position "zéro" à une position choisie. La rotation dudit organe 26 qui ne peut dépasser un tour complet, entraîne la came 31, qui appuie progressivement à l'encontre du ressort 33 sur l'extrémité libre 32 du levier 29, qui monte sur ladite came ce qui provoque la rotation du premier élément 28. Ce mouvement actionne différents interrupteurs, en particulier un interrupteur 37 pour déclencher le chauffage du bain de cuisson. Ces interrupteurs sont intégrés au circuit électrique (non représenté) du dispositif de commande. Ce mouvement de rotation du premier élément 28 est transmis au doigt de blocage 27 qui pivote vers la couronne d'entraînement 9 du panier. Du fait que l'entaille 36 ne se trouve pas en coïncidence avec le doigt 27, le doigt 27 appuie contre la face transversale périphérique 38 de ladite couronne 9, tout en continuant à bloquer la couronne d'entraînement 8 de la minuterie 5.

Lorsque le bain de cuisson 2 a atteint la température de cuisson, le dispositif de commande déclenche la mise en marche du moteur 6. Le moteur 6 entraîne en rotation par l'intermédiaire du jeu d'engrenages 15 les trois satellites 10. En effet, la roue de sortie 17 du jeu d'engrenages 15 engrène avec une 11 des deux roues de chaque satellite 10. La couronne d'entraînement 8 de la minuterie étant bloquée, une roue dentée 11 de chaque satellite 10 roule sur la denture interne 13 de la couronne d'entraînement 8 de la minuterie tandis que l'autre roue dentée 12 entraîne en rotation la couronne d'entraînement 9 du panier par sa denture interne 14.

Le panier 3 descend jusqu'à sa position abaissée (représentée en traits pleins figures 1 et 2), position pour laquelle l'entaille 36 est en regard du doigt 27, le doigt 27 est alors amené brusquement dans l'entaille 36 par un ressort de détente 39, bloquant ainsi la couronne d'entraînement 9 du panier et libérant la couronne d'entraînement 8 de la minuterie (voir traits interrompus figures 1 et 3). Le moteur 6 entraîne donc, par l'intermédiaire du jeu d'engrenages 15 et du train épicycloïdal 7, la couronne d'entraînement 8 de la minuterie, qui commence à décompter le temps.

La rotation de la minuterie 5 provoque une rotation de l'organe de réglage 26 vers sa position "zéro", ainsi que l'entraînement de la came 31, si bien que, le levier 29 étant poussé par le ressort 33, l'extrémité libre 32 du levier 29 descend progressivement le long de la came et le doigt 27 est amené progressivement par pivotement vers la couronne d'entraînement 8 de la minuterie.

A la fin de la cuisson lorsque le temps est écoulé, l'extrémité libre 32 du levier 29 s'engage dans l'ouverture 34 du deuxième élément 30, et dès qu'une encoche 35 se trouve en regard du doigt 27, le doigt 27 s'engage brusquement dans ladite encoche 35 grâce au ressort de détente 39, et bloque la rotation de la couronne d'entraînement 8 de la minuterie tout en libèrant la couronne d'entraînement 9 du panier. Grâce au train épicycloïdal 7, le moteur 6 entraîne alors la couronne d'entraînement 9 du panier, et le panier 3 monte jusqu'à sa position élevée. A l'arrivée à cette positon, la couronne d'entraînement 9 du panier agit par un ergot 40 disposé à sa périphérie sur un interrupteur 41 de coupure de l'alimentation du moteur 6. La friteuse est alors prête pour un nouveau cycle de cuisson automatique.

Comme on le comprendra, l'utilisateur peut à tout moment interrompre la cuisson en tournant l'organe de manoeuvre 26 de la minuterie vers sa position "zéro" de manière que le doigt 27 vienne bloquer la couronne d'entraînement 8 de la minuterie pour faire remonter le panier 3. L'utilisateur peut par ce moyen obtenir un cycle de cuisson manuel en effectuant une cuisson "à vue".

## Revendications

1. Friteuse électrique comportant, dans un boîtier, une cuve (1) contenant un bain de cuisson (2), une résistance chauffante électrique adaptée à chauffer ledit bain (2), ainsi qu'un panier (3) destiné à recevoir des aliments à frire et susceptible d'occuper, soit une position abaissée pour laquelle le panier (3) est plongé dans le bain (2), soit une position élevée pour laquelle le panier (3) est maintenu au-dessus du bain (2), grâce à des moyens motorisés (4) de descente et de remontée du panier (3) commandés par un dispositif de commande comportant une minuterie mécanique réglable motorisée (5), les moyens (4) de descente et de remontée du panier et la minuterie (5) étant entraînés par un moteur unique (6),
**caractérisée en ce que** le dispositif de commande comporte en outre un moyen de sélection automatique (25) subordonné à un organe de réglage (26) de la minuterie (5) et à la position du panier (3), de manière à entraîner sélectivement, soit la minuterie (5) quand le panier (3) occupe sa position abaissée, soit les moyens (4) de descente et de remontée du panier.

2. Friteuse électrique selon la revendication 1,
**caractérisée en ce que** le moteur (6) entraîne en rotation autour d'un axe (a), par l'intermédiaire d'un transmetteur de mouvement (7), une couronne d'entraînement (8) de la minuterie et une couronne d'entraînement (9) des moyens de descente et de remontée du panier, dite couronne d'entraînement du panier, et en ce que le moyen de sélection (25) comporte un doigt mobile de blocage (27) qui peut occuper deux positions, soit une position de blocage de la minuterie pour laquelle ledit doigt (27) bloque la rotation de la couronne d'entraînement (8) de la minuterie et autorise la rotation de la couronne d'entraînement (9) du panier, soit une position de blocage du panier pour laquelle ledit doigt (27) bloque la rotation de la couronne d'entraînement (9) du panier et autorise la rotation de la couronne d'entraînement (8) de la minuterie.

3. Friteuse électrique selon la revendication 2,
**caractérisée en ce que** le transmetteur de mouvement (7) est constitué par un train épicycloïdal disposé entre les deux couronnes (8,9) qui sont à cet effet dentées intérieurement, et comporte au moins un satellite (10) ayant deux roues dentées (11,12) solidaires l'une de l'autre en rotation et engrenant respectivement avec les dentures internes (13,14) des deux couronnes (8,9).

4. Friteuse électrique selon la revendication 2 ou 3,
**caractérisée en ce que** le doigt de blocage (27) étant monté pivotant autour d'un axe (b) transversal à l'axe (a) des couronnes (8,9), le moyen de sélection (25) comporte en outre deux éléments, soit un premier élément (28) solidaire en rotation du doigt (27) et comportant un levier de pivotement (29) autour de l'axe (b) du doigt, soit un deuxième élément (30) solidaire en rotation de l'organe de réglage (26) de la minuterie et comportant une came (31) qui vient en appui sur l'extrémité libre (32) du levier (29) à l'encontre de moyens élastiques (33), de sorte que la position du doigt (27) est fonction de la position de l'extrémité libre (32) sur la came (31).

5. Friteuse électrique selon l'une quelconque des revendications 2 à 4,
**caractérisée en ce que** la couronne d'entraînement (8) de la minuterie comporte une pluralité d'encoches périphériques (35) destinées à recevoir le doigt de blocage (27) en position de blocage de la minuterie, alors que la couronne d'entraînement (9) du panier comporte une entaille unique (36) positionnée à la périphérie de ladite couronne (9), et destinée à recevoir le doigt de blocage (27) en position de blocage du panier (3) uniquement quand le panier occupe sa position abaissée.

6. Friteuse électrique selon l'une quelconque des revendications 2 à 5,
**caractérisée en ce que** les moyens (4) de descente et de remontée du panier comportent un maneton (20) entraîné en rotation par la couronne d'entraînement (9) du panier et dont l'extrémité libre (21) traverse une lumière (22) pratiquée dans un coulisseau (23) solidaire du panier (3) et monté déplaçable linéairement dans au moins une glissière (24), de manière que la rotation du maneton (20) soit transformée en une translation du panier (3).

## Patentansprüche

1. Elektrisches Fritiergerät, das in einem Gehäuse einen Behälter (1), der ein Fritierbad (2) enthält, ein zum Erhitzen des Bades (2) dienendes elektrisches Heizelement sowie einen Korb (3) zur Aufnahme der zu fritierenden Lebensmittel aufweist, der entweder eine abgesenkte (untere) Stellung, in welcher der Korb (3) in das Bad (2) eintaucht, oder eine angehobene (obere) Stellung, in welcher der Korb (3) oberhalb des Bades (2) gehalten ist, mit Hilfe einer motorisierten Senk- und Hebevorrichtung des Korbes (3) einnehmen kann, welche durch eine Steuerungsvorrichtung gesteuert ist, die einen mechanisch regelbaren motorisierten Zeitschalter (5) aufweist, wobei die Senk- und Hebevorrichtung (4) des Korbes und der Zeitschalter (5) von einem einzigen Motor (6) angetrieben sind, **dadurch gekennzeichnet,** daß die Steuervorrichtung außerdem eine automatische Wahlvorrichtung (25) aufweist, die einem Steuerelement (26) des Zeitschalters (5) und der Stellung des Korbes (3) untergeordnet ist, so daß sie selektiv entweder den Zeitschalter (5) antreibt, wenn der Korb (3) seine untere Stellung einnimmt, oder die Senk- und Hebevorrichtung (4) des Korbes antreibt.

2. Elektrisches Fritiergerät nach Anspruch 1, **dadurch gekenn-** **zeichnet,** daß der Motor (6) mittels eines Bewegungsüberträgers (7) um eine Achse (a) einen Antriebskranz (8) des Zeitschalters und einen Antriebskranz (9) der Senk- und Hebevorrichtung des Korbes, den sogenannten Antriebskranz des Korbes, antreibt, und daß die Wahlvorrichtung (25) einen beweglichen Sperrfinger (27) aufweist, der zwei Stellungen einnehmen kann, nämlich eine Zeitschalter-Blockierstellung, in welcher der Sperrfinger (27) die Drehung des Antriebskranzes (8) des Zeitschalters blockiert und die Drehung des Antriebskranzes (9) des Korbes zuläßt, oder eine Korb-Blockierstellung, in welcher der Sperrfinger (27) die Drehung des Antriebskranzes (9) des Korbes blockiert und die Drehung des Antriebskranzes (8) des Zeitschalters zuläßt.

3. Elektrisches Fritiergerät nach Anspruch 2, **dadurch gekenn-** **zeichnet,** daß die Bewegungsübertragungsvorrichtung (7) aus einem Umlaufgetriebe besteht, das zwischen den zwei Kränzen (8, 9) angeordnet ist, die zu diesem Zweck eine Innenzahnung aufweisen, und mindestens einen Satelliten (10) mit zwei Zahnrädern (11, 12) aufweist, die sich miteinander drehen und jeweils mit den Innenzahnungen (13, 14) der zwei Kränze (8, 9) kämmen.

4. Elektrisches Fritiergerät nach Anspruch 2 oder 3, **dadurch** **gekennzeichnet,** daß der Sperrfinger 27 um eine quer zur Achse (a) der Kränze (8, 9) verlaufende Achse (b) schwenkbar montiert ist, und die Wahlvorrichtung (25) außerdem zwei Elemente, nämlich ein erstes, mit dem Sperrfinger (27) drehfestes Element (28), das einen um die Achse (b) des Sperrfingers schwenkbaren Schwenkhebel (29) aufweist, und ein zweites mit dem Regelelement (26) des Zeitschalters drehfest verbundenes Element (30) aufweist, das eine Kurvenflache (31) aufweist, die gegen die Wirkung eines elastischen Elements (33) auf das freie Ende (32) des Schwenkhebels (29) drückt, so daß die Stellung des Sperrfingers (27) von der Stellung des freien Endes (32) auf der Kurvenfläche (31) abhängt.

5. Elektrisches Fritiergerät nach einem der Ansprüche 2 bis 4, **dadurch gekennzeichnet,** daß der Antriebskranz (8) des Zeitschalters eine Mehrzahl von Umfangskerben (35) aufweist, die in der Blockierstellung des Zeitschalters den Sperrfinger (27) aufnehmen, während der Antriebskranz (9) des Korbes am Umfang des Kranzes (9) eine einzige Kerbe (36) aufweist, die den Sperrfinger (27) in der Blockierstellung des Korbes (3) nur aufnimmt, wenn der Korb seine untere Stellung einnimmt.

6. Elektrisches Fritiergerät nach einem der Ansprüche 2 bis 5, **dadurch gekennzeichnet,** daß die Senk- und Hebevorrichtung (4) des Korbes eine Kurbel (20) aufweist, die vom Antriebskranz (9) des Korbes gedreht wird und deren freies Ende (21) einen Schlitz (22) durchsetzt, der in einem fest mit dem Korb (3) verbundenen Gleitstück (23) ausgebildet ist, das in mindestens einer Gleitschiene (24) gradlinig verschiebbar montiert ist, so daß die Drehung der Kurbel (20) in eine Verschiebung des Korbes (3) umgewandelt wird.

## Claims

1. Electric deep fryer comprising, in a casing, a pan (1) containing a cooking bath (2), an electrical heating element suitable for heating the said bath (2), and a basket (3) intended to receive the food to be fried and able to occupy either a lowered position in which the basket (3) is immersed in the bath (2), or a raised position in which the basket (3) is held above the bath (2), by virtue of motorised means (4) for raising and lowering the basket (3) controlled by a control device including an adjustable motorised mechanical timer (5), the means (4) for lowering and raising the basket and the timer (5) being driven by a single motor (6),
characterised in that the control device comprises in addition an automatic selection means (25) dependent upon a device (26) for setting the timer (5) and upon the position of the basket (3), in such a way as to drive selectively either the timer (5) when the basket (3) is in the lowered position, or the means (4) for lowering and raising the basket.

2. Electric deep fryer according to Claim 1, characterised in that the motor (6) drives in rotation about an axis (a), by means of a motion transmitter (7), a drive wheel (8) for the timer and a drive wheel (9) for the means for lowering and raising the basket, referred to as the drive wheel for the basket, and in that the selection means (25) comprises a moving locking pin (27) which is able to occupy two positions, either a position in which the timer is locked and in which the said finger (27) locks the rotation of the drive wheel (8) for the timer and allows the drive wheel (9) for the basket to rotate, or a position in which the basket is locked and in which the said finger (27) locks the rotation of the drive wheel (9) for the basket and allows the drive wheel (8) for the timer to rotate.

3. Electric deep fryer according to Claim 2, characterised in that the motion transmitter (7) consists of an epicyclic train disposed between the two wheels (8, 9), which have teeth on the inside for this purpose, and comprises at least one planet gear (10) having two gear wheels (11, 12) which are fixed to each other with respect to rotation and mesh respectively with the internal teeth (13, 14) on the two wheels (8, 9).

4. Electric deep fryer according to Claim 2 or 3, characterised in that, the locking finger (27) being mounted so as to pivot about an axis b transverse to the axis a of the wheels (8, 9), the selection means (25) comprises in addition two members, ie a first member (28) integral in rotation with the locking finger (27) and comprising a lever (29) for pivoting about the axis b of the finger, and a second member (30) integral in rotation with the adjustment device (26) for the timer and comprising a cam (31) which bears on the free end (32) of the lever (29) in opposition to elastic means (33), so that the position of the finger (27) is a function of the position of the free end (32) on the cam (31).

5. Electric deep fryer according to any one of Claims 2 to 4, characterised in that the drive wheel (8) for the timer comprises a plurality of peripheral notches (35) intended to receive the locking finger (27) in the position in which the timer is locked, whilst the drive wheel (9) for the basket comprises a single groove (36) located at the periphery of the said wheel (9) and intended to receive the locking finger (27) in the position in which the basket (3) is locked only when the basket is in the lowered position.

6. Electric deep fryer according to any one of Claims 2 to 5, characterised in that the means (4) for lowering and raising the basket include a crank pin (20) driven in rotation by the drive wheel (9) for the basket and the free end (21) of which passes through a slot (22) in a slide (23) integral with the basket (3) and mounted so as to be able to move linearly in at least one runner (24), in such a way that the rotation of the crank pin (20) is converted into a translational movement of the basket (3).
